# EUROPÄISCHE PATENTSCHRIFT

(11) **EP 3 803 230 B1**
(45) Veröffentlichungstag und Bekanntmachung des Hinweises auf die Patenterteilung: **26.02.2025**
(21) Anmeldenummer: 19729734.4
(22) Anmeldetag: 06.06.2019
(51) Int. Cl.: F24S 80/00, H02S 20/24, E04G 21/32

(54) **MONTAGESYSTEM ZUR MONTAGE VON PHOTOVOLTAIKMODULEN AUF DÄCHERN, MIT ABSTURZSICHERUNG**
ASSEMBLY SYSTEM FOR ASSEMBLING PHOTOVOLTAIC MODULES ON ROOFS, COMPRISING A FALL-PREVENTION DEVICE
SYSTÈME DE MONTAGE CONÇU POUR MONTER DES MODULES PHOTOVOLTAÏQUES SUR DES TOITS, COMPRENANT UN DISPOSITIF ANTI-CHUTE

(30) Priorität: 08.06.2018 DE 202018103249 U
(43) Veröffentlichungstag der Anmeldung: 14.04.2021
(73) Patentinhaber: Premium Mounting Technologies GmbH & Co. KG, 95346 Stadtsteinach (DE)
(72) Erfinder: GRASS, Peter, 96317 Kronach (DE)
(74) Vertreter: Jannig & Repkow Patentanwälte PartG mbB
(86) Internationale Anmeldenummer: PCT/EP2019/064866
(87) Internationale Veröffentlichungsnummer: WO 2019/234188

(56) Entgegenhaltungen:
- WO-A1-2008/059694
- WO-A1-2017/041805
- DE-U1- 202009 016 612
- DE-U1- 202014 103 977
- NL-A- 2 008 114

## Beschreibung

Die vorliegende Erfindung betrifft eine Vorrichtung gemäß dem Oberbegriff des Patentanspruchs 1, das heißt ein Montagesystem zur Montage von Photovoltaikmodulen auf Dächern.

Photovoltaikmodule wandeln bekanntlich das Licht der Sonne direkt in elektrische Energie um. Es handelt sich im Allgemeinen um rechteckförmige Platten, die häufig auf Dächern von Gebäuden montiert sind.

Bekannte Montagesysteme zur Montage von Photovoltaikmodulen auf Dächern umfassen:
- direkt auf dem Dach oder einer darauf aufgelegten Schutzmatte anzuordnende Bodenschienen,
- auf den Bodenschienen montierbare Stützelemente, an welchen die Photovoltaikmodule und/oder sonstige Photovoltaikanlagen-Komponenten anbringbar sind, und
- Befestigungsvorrichtungen, beispielsweise in Form von Klemmen, zur Befestigung der Photovoltaikmodule und/oder sonstiger Photovoltaikanlagen-Komponenten an den Stützelementen.

Bei Bedarf können ferner quer zu den Bodenschienen verlaufende Querstreben, Kabelkanäle, Windschutzbleche, Ballaststeine, Ballaststoffwannen etc. vorgesehen werden.

Zumindest bei Flachdächern werden vorzugsweise unterschiedliche hohe Stützelemente verwendet, sodass die darauf angebrachten Photovoltaikmodule wunschgemäß gegenüber der Horizontalen geneigt und so besser zur Sonne ausgerichtet werden können.

So oder anders aufgebaute Photovoltaikanlagen sind vorzugsweise sogenannte aerodynamische Systeme. Das heißt dass diese Anlagen so ausgebildet und angeordnet sind, dass sie ohne eine Befestigung des Montagesystems am Dach und folglich ohne eine Beschädigung der Dachhaut oder der Dachaufbauten aufbaubar sind und selbst durch Unwetter nicht verschiebbar oder anhebbar sind. Ihre Lagesicherung erfolgt ausschließlich mittels deren Eigengewicht und zusätzlichem Ballast, falls dies erforderlich ist.

Zum Schutz von sich auf dem Dach aufhaltenden Personen, insbesondere von an der Photovoltaikanlage arbeitenden Personen ist es erforderlich, eine Absturzsicherungsvorrichtung vorzusehen, durch welche ein Absturz einer sich dort aufhaltenden Person vom Dach verhinderbar ist. Die praktische Realisierung einer solchen Absturzsicherungsvorrichtung ist aber insbesondere bei einem aerodynamischen System sehr aufwendig, weil in solchen Fällen ja keine Beschädigung der Dachhaut oder der Dachaufbauten erfolgen soll.

Weiterer Stand der Technik hierzu ist den Dokumenten NL 2 008 114 A, DE 20 2014 103997 U1, WO 2008/059694 A1, und WO 2017/041805 A1 entnehmbar.

Der vorliegenden Erfindung liegt daher die Aufgabe zugrunde, eine einfach und schnell montierbare und dennoch verlässliche Absturzsicherungsvorrichtung für auf Dächern anzubringende Photovoltaikanlagen zu finden.

Diese Aufgabe wird erfindungsgemäß durch das in Patentanspruch 1 beanspruchte Montagesystem gelöst.

Das erfindungsgemäße Montagesystem zeichnet sich dadurch aus, dass die Absturzsicherungsvorrichtung eine am Montagesystem angebrachte Seilführungsvorrichtung und ein durch die Seilführungsvorrichtung geführtes Sicherungsseil umfasst, mit welchem sich die dort aufhaltende Person verbinden kann.

Der beanspruchte Anbau der Absturzsicherungsvorrichtung an das Montagesystem und die Verwendung eines Sicherungsseils ermöglichen eine denkbar einfache und schnelle Montage der Absturzsicherungsvorrichtung. Die Verlässlichkeit einer solchen Lösung steht aufwendigeren Konstruktionen in nichts nach.

Vorteilhafte Weiterbildungen der Erfindung sind der folgenden Beschreibung, den Figuren, und den Unteransprüchen entnehmbar.

Die Erfindung wird nachfolgend anhand von Ausführungsbeispielen unter Bezugnahme auf die Figuren näher erläutert. Es zeigen
- Figur 1: eine perspektivische Ansicht einer Photovoltaikanlage mit einem im Folgenden näher beschriebenen Montagesystem mit Absturzsicherung,
- Figur 2: eine vergrößerte Ansicht eines Teils der in der Figur 1 gezeigten Photovoltaikanlage,
- Figur 3: eine perspektivische Ansicht eines U-Bügels der Absturzsicherungsvorrichtung, und
- Figur 4: eine Seitenansicht des in der Figur 3 gezeigten U-Bügels.

Das im Folgenden näher beschriebene Montagesystem ist ein Montagesystem zur Montage von Photovoltaikmodulen auf Flachdächern. Das Montagesystem kann jedoch unverändert auch auf Dächern mit einer geringen Neigung bis beispielsweise 5° zum Einsatz kommen, und bei einer entsprechenden Anpassung an die gegebenen Verhältnisse sogar auch bei noch stärker geneigten Dächern.

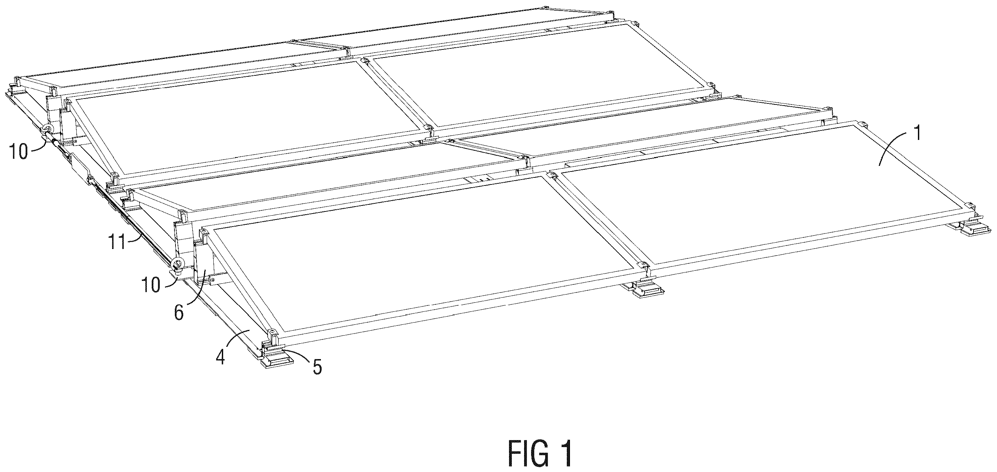

Die Figur 1 zeigt die komplette Anlage. Die unter Verwendung des Montagesystems auf dem Dach zu montierenden PhotovoltaikModule sind in den Figuren mit dem Bezugszeichen 1 bezeichnet. Die Photovoltaikmodule 1 sind rechteckige Platten mit einem diese seitlich umlaufenden, beispielsweise aus Aluminium gefertigten Rahmen. Das die Photovoltaikmodule 1 tragende Montagesystem umfasst bei dem in der Figur 1 gezeigten Beispiel eine auf das Dach aufgelegte Schutzmatte oder Schutzmatten-Streifen 3, mit der Schutzmatte 3 verklebte Bodenschienen 4, an den Bodenschienen 4 angebrachte erste (niedrige) Stützelemente 5 und zweite (hohe) Stützelemente 6, und an den zweiten Stützelementen 6 befestigte und rechtwinklig zu den Bodenschienen 4 verlaufende Querstreben 7.

Die Stützelemente 5, 6 dienen als Auflage für die Photovoltaikmodule 1. Die Photovoltaikmodule 1 werden durch Klemmen oder sonstige Befestigungsvorrichtungen an den Stützelementen 5, 6 befestigt. Durch die Verwendung von unterschiedlich hohen Stützelementen 5, 6 als Auflage für die Photovoltaikmodule 1 sind die Photovoltaikmodule gegenüber der Horizontalen geneigt und können so besser zur Sonne hin ausgerichtet werden.

Die Bodenschienen 4 werden durch Hohlkammerprofile gebildet.

Die Bodenschienen 4, die Stützelemente 5 und 6, und die Querstreben 7 bestehen im betrachteten Beispiel aus Aluminium, könnten aber auch aus einem anderen Metall oder einem sonstigen Material bestehen.

Der Vollständigkeit halber sei angemerkt, dass an den Stützelementen 6, 8 nicht nur Photovoltaikmodule 1 oder Windschutzbleche 9 angebracht werden können, sondern auch beliebige andere Photovoltaikanlagen-Komponenten.

Bei Bedarf können ferner Kabelkanäle, Windschutzbleche, Ballaststeine, Ballaststoffwannen und sonstige Photovoltaikanlagen-Komponenten vorgesehen werden.

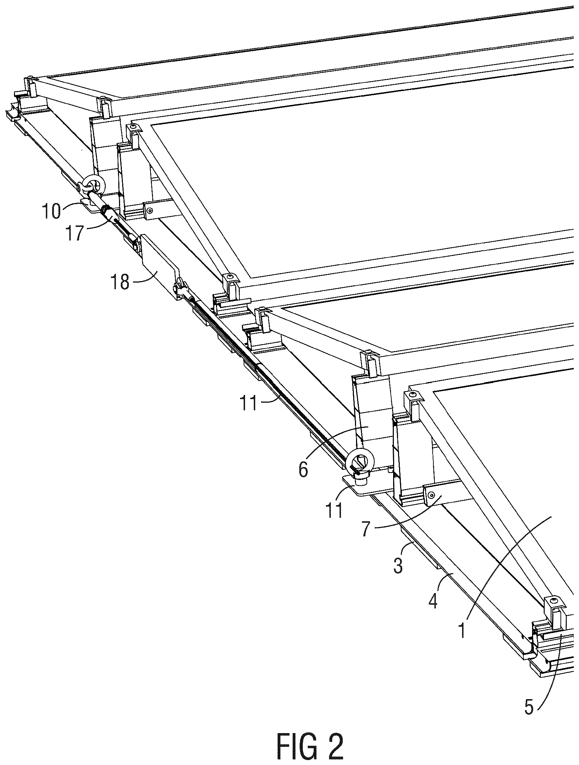

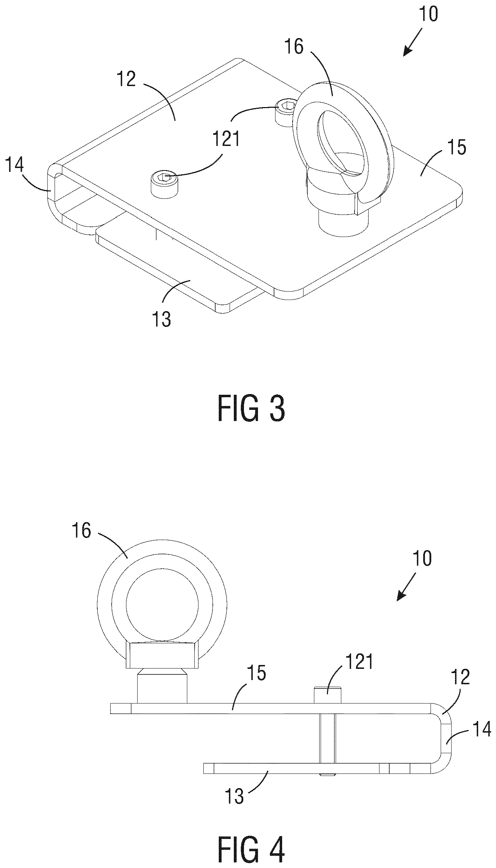

Am Montagesystem ist ferner eine in den Figuren 2 bis 4 dargestellte Absturzsicherungsvorrichtung angebaut, durch welche ein Absturz einer sich dort aufhaltenden Person vom Dach verhinderbar ist. Diese Absturzsicherungsvorrichtung enthält eine am Montagesystem angebrachte Seilführungsvorrichtung 10 und ein durch die Seilführungsvorrichtung geführtes Sicherungsseil 11, mit welchem sich die dort aufhaltende Person verbinden kann.

Die Seilführungsvorrichtung 10 ist an den Bodenschienen 4 angebracht. Sie enthält mehrere U-förmige Bügel bzw. U-Bügel 12 und daran angebrachte Ösen 16, wobei die U-Bügel dazu ausgelegt sind, von der Seite her auf die Bodenschienen 4 aufgesteckt und daran befestigt zu werden. Die Befestigung erfolgt vorliegend durch die U-Bügel 12 und die Bodenschienen 4 durchlaufende Schrauben 121, könnte aber auch beliebig anders erfolgen.

Der unter der Bodenschiene 4 zu liegen kommende untere horizontale Schenkel 13 des U-Bügels 12 weist eine der Breite der Bodenschiene entsprechende Länge auf. Der an einer der Seiten der Bodenschiene 4 zu liegen kommende vertikale Schenkel 14 des U-Bügels 12 weist eine der Höhe der Bodenschiene 4 entsprechende Länge auf. Der über der Bodenschiene 4 zu liegen kommende obere horizontale Schenkel 15 des U-Bügels 12 weist eine die Breite der Bodenschiene übersteigende Länge auf.

Wenn die Bodenschiene 4 sehr niedrig ist, ist der U-Bügel 12 eventuell schwer herzustellen. In diesem Fall kann vorgesehen werden, den unteren horizontalen Schenkel 13 kürzer auszubilden und daran eine durch ein separates Einzelteil gebildete Gegenplatte anschließen zu lassen, wobei in diesem Fall dann nicht mehr der untere horizontale Schenkel 13, sondern diese Gegenplatte die Gewinde enthält, in welche die Schrauben 121 eingeschraubt werden.

Der U-Bügel 12 ist so an der Bodenschiene 4 angebracht, dass der obere horizontale Schenkel 15 des U-Bügels seitlich aus der Photovoltaikanlage herausragt.

Die am U-Bügel 12 vorgesehenen Ösen 16 dienen zur Befestigung des Anfangs und / oder des Endes des Sicherungsseils 11 und / oder zum Hindurchführen des Sicherungsseils. Die Ösen sind jeweils an dem seitlich aus der Photovoltaikanlage herausragenden Abschnitt des oberen horizontalen Schenkels 15 angebracht und werden durch einschraubbare Einzelteile gebildet.

Das Sicherungsseil 11 ist mit einer Seilspannvorrichtung 17 zum Spannen des Sicherungsseils verbunden. Es ist ferner mit einem Falldämpfer 18 zur Reduzierung der auf eine stürzende Person wirkenden Kräfte verbunden.

Das Sicherungsseil 11 verläuft vorzugsweise in Randnähe um die gesamte Photovoltaikanlage herum.

Dabei ist es so, dass sich die parallel zu den Bodenschienen 4 verlaufenden Sicherheitsseilabschnitte nicht über die gesamte Länge der Bodenschienen erstrecken, sondern frühestes zwischen dem ersten und zweiten Photovoltaikmodul der auf einer Bodenschiene montierten Reihe von Photovoltaikmodulen beginnen und spätestens zwischen dem vorletzten und letzten Photovoltaikmodul der auf der Bodenschiene montierten Reihe von Photovoltaikmodulen enden.

Von dort, wo der parallel zu den Bodenschienen 4 verlaufende Sicherheitsseilabschnitt endet, wird das Sicherungsseil bei Bedarf durch die Seilführungsvorrichtung senkrecht zu den Bodenschienen zur gegenüberliegenden Seite der Photovoltaikanlage geführt.

Die senkrecht zu den Bodenschienen 4 verlaufenden Sicherheitsseilabschnitte verlaufen über die gesamte Ausdehnung des Photovoltaikanlage in dieser Richtung zwischen zwei benachbarten Photovoltaikmodul-Zeilen hindurch.

Eine solche Sicherheitsseil-Führung erweist sich als vorteilhaft, weil die nicht am Dach befestigten Bodenschienen 4 in der Nähe ihrer freien Enden nicht mehr so starke Kräfte aufnehmen können wie weiter in der Mitte. Es bestünde die Gefahr, dass die Bodenschienen 4 dort verrutschen oder vom Boden abheben. Diese Gefahr besteht bei der vorstehend beschriebenen Sicherheitsseil-Führung nicht.

Unabhängig hiervon verläuft das Sicherheitsseil stets in Bodennähe. Auch dies trägt dazu bei, dass die auf das Montagesystem wirkenden Kräfte nicht zu groß werden können.

Es dürfte einleuchten und bedarf keiner näheren Erläuterung, dass sowohl das Montagesystem als auch die daran angebaute Absturzsicherungsvorrichtung unabhängig voneinander mannigfaltig modifizierbar sind. Dies gilt sowohl für die konstruktive Ausbildung der einzelnen Teile als auch für den Anbringungsort und die Art und Weise der Anbringung.

Das hier vorgestellte Montagesystem mit angebauter Absturzsicherungsvorrichtung erweist sich unabhängig von den Einzelheiten der praktischen Realisierung als sehr vorteilhaft. Der Anbau der Absturzsicherungsvorrichtung an das Montagesystem und die Verwendung eines Sicherungsseils ermöglichen eine denkbar einfache und schnelle Montage der Absturzsicherungsvorrichtung und eine sehr zuverlässige Absturzsicherung.

### Bezugszeichenliste

- 1: Photovoltaikmodul
- 3: Schutzmatte oder Schutzmatten-Streifen
- 4: Bodenschiene
- 5: erstes Stützelement (niedrig)
- 6: zweites Stützelement (hoch)
- 7: Querstrebe

- 10: Seilführungsvorrichtung
- 11: Sicherungsseil
- 12: U-Bügel von 10
- 13: unterer horizontaler Schenkel von 12
- 14: vertikaler Schenkel von 12
- 15: oberer horizontaler Schenkel von 12
- 16: Öse von 10
- 17: Seilspannvorrichtung
- 18: Falldämpfer

- 121: Schraube zur Befestigung von 12 an 4

## Patentansprüche

1. Montagesystem zur Montage von Photovoltaikmodulen (1) auf Dächern, mit einer Absturzsicherungsvorrichtung, durch welche ein Absturz einer sich dort aufhaltenden Person vom Dach verhinderbar ist,
wobei die Absturzsicherungsvorrichtung eine am Montagesystem angebrachte Seilführungsvorrichtung (10) und ein durch die Seilführungsvorrichtung geführtes Sicherungsseil (11) umfasst, mit welchem sich die dort aufhaltende Person verbinden kann,
wobei das Montagesystem
- direkt auf dem Dach oder einer darauf aufgelegten Schutzmatte (3) anzuordnende Bodenschienen (4), und
- auf den Bodenschienen montierbare Stützelemente (5, 6), an welchen die Photovoltaikmodule (1) und/oder sonstige Photovoltaikanlagen-Komponenten anbringbar sind,
umfasst, und
wobei die Seilführungsvorrichtung (10) an den Bodenschienen angebracht ist,
**dadurch gekennzeichnet, dass** die Seilführungsvorrichtung (10) mehrere U-Bügel (12) umfasst, die dazu ausgelegt sind, von der Seite her auf die Bodenschienen (4) aufgesteckt und daran befestigt zu werden.

2. Montagesystem nach Anspruch 1, **dadurch gekennzeichnet, dass** der unter der Bodenschiene (4) zu liegen kommende untere horizontale Schenkel (13) des U-Bügels (12) eine der Breite der Bodenschiene entsprechende Länge hat.

3. Montagesystem nach Anspruch 1 oder 2, **dadurch gekennzeichnet, dass** der an einer der Seiten der Bodenschiene (4) zu liegen kommende vertikale Schenkel (14) des U-Bügels (12) eine der Höhe der Bodenschiene entsprechende Länge hat.

4. Montagesystem nach einem der vorhergehenden Ansprüche, **dadurch gekennzeichnet, dass** der über der Bodenschiene (4) zu liegen kommende obere horizontale Schenkel (15) des U-Bügels (12) eine die Breite der Bodenschiene übersteigende Länge hat.

5. Montagesystem nach Anspruch 4, **dadurch gekennzeichnet, dass** der U-Bügel (12) so an der Bodenschiene (4) angebracht ist, dass der obere horizontale Schenkel (15) des U-Bügels seitlich aus der Photovoltaikanlage herausragt.

6. Montagesystem nach einem der vorhergehenden Ansprüche, **dadurch gekennzeichnet, dass** die Seilführungsvorrichtung (10) Ösen (16) zur Befestigung des Anfangs und / oder des Endes des Sicherungsseils und / oder zum Hindurchführen des Sicherungsseils umfasst.

7. Montagesystem nach Anspruch 6 in Verbindung mit Anspruch 5, **dadurch gekennzeichnet, dass** die Öse (16) an dem seitlich aus der Photovoltaikanlage herausragenden Abschnitt des oberen horizontalen Schenkels (15) angebracht ist.

8. Montagesystem nach einem der vorhergehenden Ansprüche, **dadurch gekennzeichnet, dass** das Sicherungsseil (11) mit einer Seilspannvorrichtung (17) zum Spannen des Sicherungsseils verbunden ist.

9. Montagesystem nach einem der vorhergehenden Ansprüche, **dadurch gekennzeichnet, dass** das Sicherungsseil (11) mit einem Falldämpfer (18) zur Reduzierung der auf eine stürzende Person wirkenden Kräfte verbunden ist.

10. Montagesystem nach einem der vorhergehenden Ansprüche, **dadurch gekennzeichnet, dass** das Sicherungsseil (11) in Randnähe um die Photovoltaikanlage herum verläuft.

11. Montagesystem nach Anspruch 10, **dadurch gekennzeichnet, dass** sich die parallel zu den Bodenschienen (4) verlaufenden Sicherheitsseilabschnitte nicht über die gesamte Länge der Bodenschienen erstrecken, sondern frühestes zwischen dem ersten und zweiten Photovoltaikmodul (1) der auf einer Bodenschiene montierten Reihe von Photovoltaikmodulen beginnen und spätestens zwischen dem vorletzten und letzten Photovoltaikmodul der auf der Bodenschiene montierten Reihe von Photovoltaikmodulen enden.

12. Montagesystem nach Anspruch 11, **dadurch gekennzeichnet, dass** das Sicherheitsseil (11) von dort, wo der parallel zu den Bodenschienen (4) verlaufenden Sicherheitsseilabschnitt endet, durch die Seilführungsvorrichtung (10) senkrecht zu den Bodenschienen zur gegenüberliegenden Seite der Photovoltaikanlage geführt wird.

13. Montagesystem nach einem der Ansprüche 10 bis 12, **dadurch gekennzeichnet, dass** die senkrecht zu den Bodenschienen (4) verlaufenden Sicherheitsseilabschnitte über die gesamte Ausdehnung des Photovoltaikanlage in dieser Richtung zwischen zwei benachbarten Photovoltaikmodul-Zeilen hindurch verlaufen.

## Claims

1. Mounting system for mounting photovoltaic modules (1) on roofs, having a fall protection device by way of which it is preventable that a person present on the roof can fall off the latter;
wherein the fall protection device comprises a rope guiding device (10) which is attached to the mounting system, and a safety rope (11) which is guided by the rope guiding device and to which the person present there can connect;
wherein the mounting system comprises
- base rails (4) which are to be directly disposed on the roof or on a protective mat (3) placed on the latter; and
- support elements (5, 6) which are able to be assembled on the base rails and to which the photovoltaic modules (1) and/or other photovoltaic system components are attachable; and
wherein the rope guiding device (10) is attached to the base rails,
**characterized in that** the rope guiding device (10) comprises a plurality of U-brackets (12) which are conceived to be plugged onto the base rails (4) from the side and to be fastened to the latter.

2. Mounting system according to Claim 1, **characterized in that** the lower horizontal leg (13) of the U-bracket (12) that comes to lie below the base rail (4) has a length corresponding to the width of the base rail.

3. Mounting system according to Claim 1 or 2, **characterized in that** the vertical leg (14) of the U-bracket (12) that comes to lie on one of the sides of the base rail (4) has a length corresponding to the height of the base rail.

4. Mounting system according to one of the preceding claims, **characterized in that** the upper horizontal leg (15) of the U-bracket (12) that comes to lie above the base rail (4) has a length exceeding the width of the base rail.

5. Mounting system according to Claim 4, **characterized in that** the U-bracket (12) is attached to the base rail (4) in such a way that the upper horizontal leg (15) of the U-bracket protrudes laterally from the photovoltaic system.

6. Mounting system according to one of the preceding claims, **characterized in that** the rope guiding device (10) comprises eyelets (16) for fastening the beginning and/or the end of the safety rope, and/or for guiding through the safety rope.

7. Mounting system according to Claim 6 in conjunction with Claim 5, **characterized in that** the eyelet (16) is attached to the portion of the upper horizontal leg (15) that protrudes laterally from the photovoltaic system.

8. Mounting system according to one of the preceding claims, **characterized in that** the safety rope (11) is connected to a rope tensioning device (17) for tensioning the safety rope.

9. Mounting system according to one of the preceding claims, **characterized in that** the safety rope (11) is connected to a fall arrestor (18) for reducing the forces acting on a falling person.

10. Mounting system according to one of the preceding claims, **characterized in that** the safety rope (11) extends about the photovoltaic system so as to be close to the periphery of the latter.

11. Mounting system according to Claim 10, **characterized in that** the safety rope portions running parallel to the base rails (4) do not extend over the entire length of the base rails, but begin at the earliest between the first and the second photovoltaic module (1) of the row of photovoltaic modules mounted on a base rail, and terminate at the latest between the penultimate and the last photovoltaic module of the row of photovoltaic modules mounted on the base rail.

12. Mounting system according to Claim 11, **characterized in that**, from where the safety rope portion running parallel to the base rails (4) terminates, the safety rope (11) is guided by the rope guiding device (10) perpendicularly to the base rails to the opposite side of the photovoltaic system.

13. Mounting system according to one of Claims 10 to 12, **characterized in that** the safety rope portions running perpendicularly to the base rails (4) in this direction pass through between two adjacent photovoltaic module rows over the entire extent of the photovoltaic system.

## Revendications

1. Système de montage pour le montage de modules photovoltaïques (1) sur des toits, comprenant **un** dispositif de protection contre les chutes qui empêche une personne se trouvant à cet endroit de tomber du toit,
le dispositif de protection contre les chutes comprenant **un** dispositif (10) de guidage de câble monté sur le système de montage et **un** câble de sécurité (11) guidé à travers le dispositif de guidage de câble, auquel la personne se trouvant là est apte à se relier,
le système de montage comprenant
- des rails inférieurs (4) à disposer directement sur le toit ou sur un tapis de protection (3) posé sur celui-ci, et
- des éléments de support (5, 6) aptes à être montés sur les rails inférieurs, sur lesquels les modules photovoltaïques (1) et/ou d'autres composants de l'installation photovoltaïque sont aptes à être montés, et
le dispositif (10) de guidage de câble étant monté sur les rails inférieurs,
**caractérisé en ce que** le dispositif (10) de guidage de câble comprend une pluralité d'étriers en U (12) adaptés pour être insérés et fixés sur les rails inférieurs (4) depuis le côté.

2. Système de montage selon la revendication 1, **caractérisé en ce que** la branche horizontale inférieure (13) de l'étrier en U (12), qui vient se placer sous le rail inférieur (4), a une longueur correspondant à la largeur du rail inférieur.

3. Système de montage selon la revendication 1 ou la revendication 2, **caractérisé en ce que** la branche verticale (14) de l'étrier en U (12) qui se trouve sur l'un des côtés du rail inférieur (4) a une longueur correspondant à la hauteur du rail inférieur.

4. Système de montage selon l'une des revendications précédentes, **caractérisé en ce que** la branche horizontale supérieure (15) de l'étrier en U (12) venant se placer au-dessus du rail inférieur (4) a une longueur supérieure à la largeur du rail inférieur.

5. Système de montage selon la revendication 4, **caractérisé en ce que** l'étrier en U (12) est monté sur le rail inférieur (4) de telle sorte que la branche horizontale supérieure (15) de l'étrier en U dépasse latéralement de l'installation photovoltaïque.

6. Système de montage selon l'une des revendications précédentes, **caractérisé en ce que** le dispositif (10) de guidage de câble comprend des œillets (16) de fixation du début et/ou de la fin du câble de sécurité et/ou de passage du câble de sécurité.

7. Système de montage selon la revendication 6 en combinaison avec la revendication 5, **caractérisé en ce que** l'œillet (16) est fixé à la partie de la branche horizontale supérieure (15) qui dépasse latéralement de l'installation photovoltaïque.

8. Système de montage selon l'une des revendications précédentes, **caractérisé en ce que** le câble de sécurité (11) est relié à un dispositif de tension de câble (17) pour tendre le câble de sécurité.

9. Système de montage selon l'une des revendications précédentes, **caractérisé en ce que** le câble de sécurité (11) est relié à un amortisseur de chute (18) pour réduire les forces agissant sur une personne qui tombe.

10. Système de montage selon l'une des revendications précédentes, **caractérisé en ce que** le câble de sécurité (11) s'étend autour de l'installation photovoltaïque, à proximité du bord.

11. Système de montage selon la revendication 10, **caractérisé en ce que** les parties de câble de sécurité s'étendant parallèlement aux rails inférieurs (4) ne s'étendent pas sur toute la longueur des rails inférieurs, mais commencent au plus tôt entre le premier et le deuxième module photovoltaïque (1) de la série de modules photovoltaïques montés sur un rail inférieur et se terminent au plus tard entre l'avant-dernier et le dernier module photovoltaïque de la série de modules photovoltaïques montés sur le rail inférieur.

12. Système de montage selon la revendication 11, **caractérisé en ce que** le câble de sécurité (11) est guidé par le dispositif (10) de guidage de câble perpendiculairement aux rails inférieurs vers le côté opposé de l'installation photovoltaïque à partir de l'endroit où se termine la partie de câble de sécurité s'étendant parallèlement aux rails inférieurs (4).

13. Système de montage selon l'une des revendications 10 à 12, **caractérisé en ce que** les parties de câble de sécurité perpendiculaires aux rails inférieurs (4) s'étendent sur toute l'étendue de l'installation photovoltaïque dans cette direction, en passant entre deux rangées de modules photovoltaïques adjacentes.
